# EUROPÄISCHE PATENTSCHRIFT

(11) **EP 2 045 199 B1**
(45) Veröffentlichungstag und Bekanntmachung des Hinweises auf die Patenterteilung: **12.05.2010**
(21) Anmeldenummer: 08165733.0
(22) Anmeldetag: 02.10.2008
(51) Int. Cl.: B65G 53/24, B65G 53/60, B07B 7/01, B07B 7/06

(54) **Druckluftförderanlage für Schüttgut**
Compressed air supply device for bulk material
Appareil à air comprimé pour alimenter en poudre ou en matériaux granulaires

(30) Priorität: 02.10.2007 DE 102007047119; 02.10.2007 DE 202007013754 U
(43) Veröffentlichungstag der Anmeldung: 08.04.2009
(73) Patentinhaber: Wilhelm, Klaus, 83026 Rosenheim (DE)
(72) Erfinder: Wilhelm, Klaus, 83026 Rosenheim (DE)
(74) Vertreter: Alber, Norbert

(56) Entgegenhaltungen:
- EP-A- 0 301 217
- EP-A- 0 528 755
- EP-A- 0 538 711
- EP-A- 0 673 864
- EP-A- 0 781 587
- EP-A- 1 580 133
- WO-A-2004/028711
- AT-U1- 6 151
- DE-A1- 2 058 605
- DE-A1- 3 223 073
- DE-A1- 3 327 208
- DE-A1- 3 327 461
- DE-A1- 3 502 448
- DE-A1-102006 005 209
- DE-C- 489 542
- DE-C1- 10 033 837
- DE-U1- 29 806 011
- FR-A- 2 354 271
- FR-A- 2 561 140
- GB-A- 750 830
- NL-A- 7 601 320
- US-A- 3 685 651
- US-A- 4 699 710

## Beschreibung

Die Erfindung betrifft Druckluftförderanlagen für Schüttgut und Verfahren zur Fraktionentrenung von Fraktionen unterschiedlicher Korngrößen, gemäß dem unabhängigen Ansprüche 1 und 15.

### II. Technischer Hintergrund

Vor allem in der Kunststofftechnik, aber auch in der Pharmazie- und der Lebensmitteltechnologie, müssen häufig z. B. Rohmaterialien in Form von Granulaten oder Mahlgütern in Rohrleitungen transportiert werden. Hierfür stehen unterschiedliche Technologien zur Verfügung. Die bekanntestes ist die Förderung mittels eines Sauggebläses, die weit weniger verbreitete ist die Druckluft-Fördertechnik. Im Folgenden wird nur noch vom Granulat gesprochen, obwohl weiterhin ebenso Mahlgut darunter verstanden werden soll.

Dabei wird eine Ejektor-Sauglanze in den Vorratsbehälter mit Granulat eingesteckt. Durch das Einblasen von Druckluft, meist mit mehr als 1 bar Überdruck, in diese Sauglanze wird in Förderrichtung eine Sogwirkung in der Sauglanze bewirkt, die das Granulat einsaugt und in die angeschlossene Rohrleitung mitreißt.

Am Zielort angekommen, muss die Transportluft vom Transportgut wieder getrennt werden, was durch sogenannte Abscheider geschieht.

Die Transportluft wird über einen Filter zurück in die Umgebung geleitet, während das Transportgut, z. B. Granulat oder Mahlgut im Abscheider nach unten fällt und meist schwerkraftbedingt einen darunter angeordneten Verbraucher, beispielsweise einem Granulattrockner oder direkt einer Kunststoffspritzmaschine, zugeführt wird.

Ein Problem bei Granulaten und Mahlgütern, wie sie insbesondere beim Recycling von Wertstoffen anfallen, ist der darin vorhandene Staubanteil:

Der Staubanteil bereitet sowohl in der Verarbeitung Probleme, indem er beispielsweise in einer Kunststoffspritzmaschine ein anderes Aufschmelzverhalten zeigt als die regulären Granulatkörner. Des Weiteren behindert der Staub durch seine Ablagerung den Einsatz von optischen oder kapazitiven Füllstandssensoren und vor allem verstopft der Staub sehr schnell die vorhandenen Filter zum Abführen der Förderluft, so dass diese regelmäßig gereinigt oder ersetzt werden müssen, wodurch diese Förderanlagen selten lange mannlos betrieben werden können.

Nicht zuletzt ist der Staubanteil abhängig vom Material und ist auch eine ständige Explosionsgefahr, falls zündfähige Verhältnisse auftreten können.

Zunächst wäre es nahe liegend, unmittelbar beim Entnehmen des Granulates aus dem Vorratsbehälter den Staubanteil daraus zu entfernen, so dass im weiteren Förderweg die staubbedingten Probleme dann nicht mehr auftreten sollten.

Dies ist jedoch nicht ausreichend, da durch die Förderung selbst, also die Reibung der Granulatpartikel aneinander sowie an den Rohrleitungswänden etc., selbst bei einem ursprünglich staubfreien Granulat im Wege der Förderung und weiteren Handhabung wieder Staub entsteht, so dass vor allem noch einmal unmittelbar vor den Verbrauchern dieser Granulate eine vollständige Entstaubung auf einfache Art und Weise benötigt wird.

Im Deckenbereich des Abscheiders ist ein Filter angeordnet, durch den die Förderluft in die Umgebung entlassen wird, während diese Sperre - meist auch noch ein zusätzliches, unter dem Filter angeordnetes gröberes Gitter - vom Transportgut nicht passiert werden kann und die Granulatkörner im Abscheider nach unten fallen und diesen durch die untere Auslassöffnung zum Verbraucher hin verlassen.

Dadurch setzt sich an dem Sieb bzw. Filter im Deckenbereich zunehmend Staub an, bis dieser manuell oder durch Druckluft gereinigt wird oder auch von selbst herabfällt. Jedoch fällt der abgelagerte Staub dann wiederum nach unten in das Granulat und wird zusammen mit dem Granulat ebenfalls dem Verbraucher zugeführt.

Somit erfolgt nur eine Reinigung der Transportluft, nicht des Granulates.

Die DE 32 23 073 zeigt als nächst reichender Stand der Technik eine Luftförderanlage mit Granulatabscheider und nachgeschalteter Staubabscheidung, bei der Granulatabscheidung und Staubabscheidung bereits entlang des Förderweges getrennt und beabstandet sind wie bei der vorliegenden Erfindung, die Förderung jedoch nicht mittels Druckluft, sondern mittels Saugluft bewirkt wird.

Des Weiteren ist aus der EP 15 80 133 eine Vorrichtung zum Entleeren von Schüttgut aus einem Bigbag mittels einer Sauglanze bekannt, bei der jedoch Druckluft nur zum Auflockern des abzusaugenden Granulates benutzt wird, jedoch kein Hinweis gegeben wird, die Druckluft auch zum Erzeugen der Absaugung zu benutzen.

### III. Darstellung der Erfindung

### a) Technische Aufgabe

Es ist daher die Aufgabe gemäß der Erfindung, einen Granulatabscheider mit einem Staubabscheider zu schaffen, der einfach und mit wenig Aufwand zu betreiben ist und den Staub zuverlässig von den regulären Bestandteilen des Granulates bzw. Mahlgutes trennt.

Aufgabe den erfindungsgemäßen DruckluftFörderanlage, in der sich dieser Granulatabscheider befindet, besteht auch darin, dass im Granulatabscheider lediglich das Granulat abgeschieden wird, der Staubanteil jedoch zusammen mit der Förderluft abgeführt und abseits vom Granulatsammelbereich erst der Staubanteil von der Förderluft getrennt wird.

### b) Lösung der Aufgabe

Diese Aufgabe wird durch Merkmale der Ansprüche 1 und 15 gelöst. Vorteilhafte Ausführungsformen ergeben sich aus den Unteransprüchen.

Zu diesem Zweck ist der - meist im oberen Bereich des Abscheiders angeordnete - Auslassöffnung für die Förderluft lediglich ein grobes Sieb vorgeschaltet, welches auch vom Staubanteil problemlos durchdrungen werden kann, so dass lediglich die Granulatkörner, die allesamt dieses Sieb nicht durchdringen können, sich schwerkraftbedingt im Granulatsammelbereich unterhalb des Siebes im Granulatabscheider ablagern.

Der Staub wird mit der Förderluft einem Staubsammelbehälter zugeführt, dessen Auslassöffnung von einem Filter verschlossen ist, der vom Staubanteil nicht mehr durchdrungen werden kann, so dass sich der Staub am Filter ablagert und von dort in den Sammelbehälter herabfällt, der bis auf die Auslassöffnung und die Zufuhrleitung dicht verschlossen ist.

Der Vorteil besteht darin, dass kein Staubanteil mehr in den Sammelbereich des Abscheiders hineinfallen kann, da der Staubsammelbehälter separat vom Granulat-Sammelbereich, insbesondere beabstandet vom Granulatabscheider, angeordnet ist.

### Dies bietet wiederum weitere Vorteile:

Da der Granulatabscheider in der Regel direkt auf den Verbraucher für das Granulat aufgesetzt ist, damit die abgeschiedenen Granulate schwerkraftbedingt und ohne weitere Hilfsvorrichtungen nach unten in den Verbraucher, beispielsweise eine Kunststoffspritzmaschine oder einen Granulattrockner, herabfallen können, sind die Platzverhältnisse oberhalb des Granulatabscheiders meistens begrenzt.

Ein separater und abseits stehender Staubsammelbehälter kann dagegen an einer solchen Stelle platziert werden, wo keine räumlichen Beschränkungen vorhanden sind und kann dementsprechend beinahe beliebig groß gestaltet werden.

Dies wiederum erlaubt es innerhalb des Sammelbehälters auch einen entsprechend großen Filter anzuordnen, der beispielsweise den Innenraum des Sammelbehälters zu mehr als der Hälfte ausfüllen kann.

Dadurch ist eine sehr große Filterfläche erzielbar, was einerseits einen geringen Strömungswiderstand für die Förderluft bedeutet und zum anderen dazu führt, dass sich der Filter erst nach viel längerer Zeit zusetzt als ein kleiner, direkt auf den Abscheider aufgesetzter Filter.

Dadurch wird die Zeit, in der eine solche Förderanlage mannlos betrieben werden kann, beträchtlich ausgeweitet.

Des Weiteren können in einem solchen Staubsammelbehälter mit Filter mehrere Zufuhrleitungen von mehreren nebeneinander stehenden Granulatabscheidern münden, was die Staubabscheidung zusätzlich verbilligt.

Abhängig von den Verhältnissen am Einsatzort und vor allem dann, wenn nur ein einziger Granulatabscheider zu betreiben ist, kann der Staubsammelbehälter auch mit einem entsprechenden festen Anschlussstutzen direkt am Granulatabscheider gehaltert werden, indem beispielsweise der abnehmbare obere Deckel des Granulatabscheiders als den topfförmigen Staubabscheider haltender Stutzen ausgebildet ist.

Dabei kommt es lediglich darauf an, dass der Staubsammelbehälter so positioniert und gestaltet ist, dass der vom Filter in den Sammelbehälter herabfallende Staub nicht in den Granulatsammelbereich zurückgelangen, insbesondere nicht in diesen hinabfallen kann, sondern sich stattdessen am Boden des Staubsammelbehälters sammelt.

Die Siebscheibe, die die Auslassöffnung im Granulatabscheider verschließt, sollte einen so großen Öffnungsanteil wie möglich aufweisen und insbesondere nur ein Gitter sein und dabei die Öffnungen möglichst groß gewählt werden, um die Möglichkeiten zum Ablagern von Staub am Sieb so gering wie möglich zu halten.

Dennoch ist eine oder mehrere Reinigungsdüsen entgegen der Strömungsrichtung, also insbesondere von der Auslassöffnung her, auf das Sieb gerichtet und mit Druckluft beaufschlagbar, um eine ganz oder teilweise zugesetzte Siebscheibe reinigen zu können.

Damit möglichst der gesamte Staubanteil zusammen mit der Förderluft den Granulatabscheider durch die Auslassöffnung verlässt, sollte zum einen die abführende Staubleitung einen gleichgroßen oder größeren Querschnitt besitzen, als die größte der in dem Granulatabscheider mündende Förderleitungen zusammen.

Des Weiteren sollte der Granulatabscheider so gestaltet sein, dass sich keine Staubablagerungen z. B. durch Verwirbelungen der Förderluft in dem Granulatabscheider bilden können.

Dazu ist die Auslassöffnung vorzugsweise zentral in der oberen Stirnfläche, meist einem separaten Deckel des meist aufrechtstehenden zylindrischen Granulatabscheiders angeordnet und dessen Kontur verjüngt sich zur Auslassöffnung hin konisch, beispielsweise innerhalb des auf den zylindrischen Grundkörper aufgesetzten konischen Deckels des Granulatabscheiders.

Wenn auch die Förderleitung dort mündet, um sie gegen das angesammelte Granulat am Boden zu richten und dadurch den Verschleiß an den Wänden zu minimieren, wird die Auslassöffnung gegebenenfalls auch etwas zur Seite versetzt.

Durch die kaum mehr auftretenden Staubablagerungen im Inneren des Granulatabscheiders können bei z. B. aus Kunststoff oder Glas bestehenden Seitenwänden des Granulatabscheiders außerhalb der Wände kapazitive Füllstandssensoren die Höhe des Granulatfüllstandes im Granulatabscheider abtasten und eine mit den Sensoren verbundene Steuerung die Förderluft ein- und ausschalten.

Eine besonders einfache und kostengünstige Bauform eines Staub-Sammelbehälters ist ein Fass, insbesondere ein Kunststofffass, mit einem z. B. mittels Spannverschluss dicht aufsetzbaren Deckel.

In den Deckel kann ein z. B. zylindrischer großflächiger Filter mit einer seiner Stirnflächen dicht eingesetzt sein, der dann den Großteil des Innenraumes des Fasses einnimmt und bis über die Hälfte der Höhe nach unten hängt. Dadurch sind Filter mit einer sehr großen Filterdurchtrittsfläche verwendbar.

Eine besonders vollständige Entstaubung wird erreicht, wenn die Entstaubung im Granulatabscheider noch eine zweite Stufe umfasst:

Bei der zuvor beschriebenen Bauform kann es - je nach Fördergut und Staubanteil - dazu kommen, dass Restmengen des Staubes sich zwischen den Granulatkörnern im Granulatsammelbereich mit ablagern, beispielsweise durch Anhaftung an den Granulatkörnern.

Um auch diesen restlichen Staubanteil im bereits abgelagerten Granulat entfernen zu können, wird in einer zweiten Variante der Erfindung vorgeschlagen, durch aktives Einblasen von Druckluft - meist in festgelegten zeitlichen Abständen und vorzugsweise dann, wenn die Förderleitungen in den Granulatabscheider verschlossen sind, also keine Granulatförderung erfolgt - das bereits abgelagerte Granulat im Granulatabscheider nochmals hochgewirbelt wird und dadurch auch im Granulat enthaltene Staubpartikel freigesetzt werden. Dafür wird vorzugsweise auch die Granulatöffnung verschlossen.

Da die eingeschossene Reinigungsluft ebenfalls durch die Auslassöffnung den Granulatabscheider verlassen muss, nimmt sie diese restlichen Staubpartikel durch das Sieb hindurch mit.

Dies funktioniert natürlich nur, wenn dabei der Granulatbehälter - bis auf die Reinigungsdüsen und die Auslassöffnung - dicht verschlossen ist, während des Einschießens von Reinigungs-Druckluft, also einerseits alle Förderleitungen geschlossen sind, aber auch der untere Auslass des Granulatabscheiders für das Granulat dicht verschlossen ist, der ansonsten meist offen in den Vorratsbehälter des darunter liegenden Verbrauchers übergeht.

In diesem Fall ist also in der unteren Granulatöffnung ein Verschlusselement, beispielsweise ein Verschlusskonus, vorhanden, wobei vorzugsweise auch die Auslass-Wände im unteren Bereich des Granulatabscheiders sich konisch verjüngen.

Die Reinigungsdüsen können dabei sowohl im Verschlusselement, beispielsweise dem Verschlusskonus, und/oder in den insbesondere konischen Seitenwänden im Auslassbereich und/oder im darüberliegenden zylindrischen Bereich der Seitenwände, angeordnet sein.

Die Reinigungsdüsen stehen - ebenso wie die Füllstandssensoren - mit einer Steuerung in Verbindung, die einerseits das Einschießen von Reinigungsluft steuert, andererseits das Ein- und Ausschalten der Förderluft und ebenso das Ein-und Ausschalten von Reinigungsluft für das Sieb sowie die Verschlusselemente für die Förderleitungen und die Granulatöffnung steuert.

### c) Ausführungsbeispiele

Ausführungsformen gemäß der Erfindung sind im Folgenden beispielhaft näher beschrieben. Es zeigen:
- Fig. 1:: eine erste Version der Erfindung, und
- Fig. 2:: eine zweite Version der Erfindung,
- Fig. 3:: eine spezielle Zuführungsvariante.

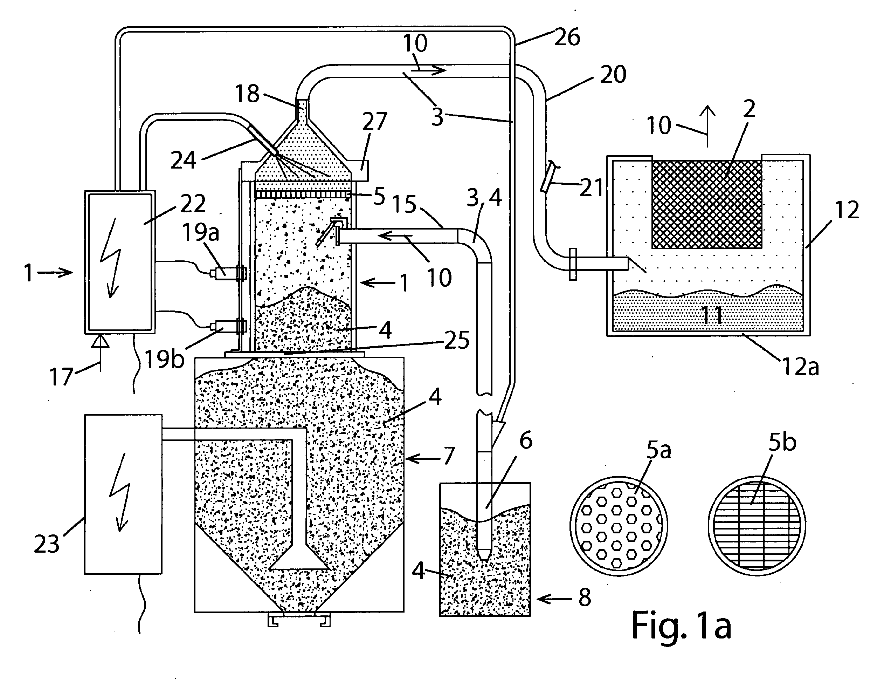

Figur 1a zeigt eine Druckluftförderanlage für ein Schüttgut, welches in einem Vorratsbehälter 8 gelagert ist und zu einem Verbraucher, in diesem Fall einem Granulattrockner 7, gefördert werden muss. Im Folgenden ist ausschließlich von einem Granulat beispielsweise für alle mit dieser Technik förderbaren und behandelbaren Schüttgüter die Rede, ohne die Erfindung hierauf zu beschränken.

Dazu wird eine Ejektorsauglanze 6 in den Vorratsbehälter 8, beispielsweise einen Big-Bag oder einen Oktabin, hineingesteckt, in der eine Druckluftleitung 26 mündet, das Granulat 4 aus dem Vorratsbehälter 8 durch die offene Öffnung in der Sauglanze in die an die Lanze angeschlossene Förderleitung 15 hinein mitreißt.

Die Förderleitung 15, meist ein flexibler Schlauch, fördert das Schüttgut auch über größere Entfernungen in Richtung des Verbrauchers, hier des Granulattrockners 7, bei dem es sich im Wesentlichen um einen aufrechtstehenden Zwischenbehälter handelt, in den eine von einem Luftaufbereiter 23 aufgeheizte und gegebenenfalls getrocknete Trocknungsluft eingebracht wird, welche das Granulat durchströmt und dadurch trocknet. Von dort läuft das Granulat 4 in einen darunter angeordneten, weiteren, nicht mehr dargestellten Verbraucher, wie etwa eine Kunststoffspritzmaschine.

Die Förderleitung 15 mündet nicht direkt in den Verbraucher, sondern in einen meist darauf aufgesetzten oder im Abstand darüber gesetzten Granulatabscheider, in dem das Granulat von der Förderluft wieder getrennt wird.

Zu diesem Zweck besitzt der dichte, aufrechtstehende Zylinder des Granulatabscheiders eine obere Auslassöffnung 18 für die Förderluft und den Staubabteil, die sich in den konisch nach oben zulaufenden, auf den zylindrischen Teil dicht aufgesetzten und abnehmbaren Deckel 27 befindet.

Das untere Ende des zylindrischen Granulatabscheiders dient als Granulatsammelbereich und kann nach unten vollständig offen sein oder sich nach unten zunächst konisch zu einer unteren Granulatauslassöffnung verjüngen.

Dazwischen mündet in einer Seitenwand des Granulatabscheiders die Förderleitung 15, deren freies Ende hier von einer Verschlussklappe verschlossen wird, die im drucklosen Zustand der Förderleitung 15 schwerkraftbedingt senkrecht herabhängt und das vertikale, offene Ende verschließt, jedoch um eine horizontale Achse oberhalb der Förderleitung 15 aufgeschwenkt werden kann und dann als Prallplatte für das Granulat dient, welches aus der Öffnung schießt.

Unterhalb der Auslassöffnung 18, hier noch im zylindrischen Bereich, ist das Sieb 5 im Granulatabscheider angeordnet, welches gerade engmaschig genug ist, um sämtliche Granulatpartikel zurückzuhalten, jedoch die Staubanteile problemlos in Richtung Auslassöffnung 18 hindurchtreten lässt.

Da die Steuerung - aufgrund der Signale der hier zwei übereinander angeordneten Füllstandssensoren 19a, b für maximalen und minimalen Füllstand - die Förderluft solange und so oft einschaltet, dass der untere Bereich des Granulatabscheiders immer mit Granulat gefüllt ist, ist die obere Auslassöffnung 18 der einzig mögliche Auslass für die Förderluft, da die Granulatauslassöffnung wegen das angelagerten Granulats einen wesentlich höheren Strömungswiderstand darstellt.

Die Förderluft verlässt daher den Abscheider so gut wie vollständig über die obere Auslassleitung 18 und ebenso der Staubanteil.

Da sich trotz der Grobmaschigkeit des Siebes 5 - welches auswechselbare Siebscheiben 5a, b besitzt, die je nach Art des zu fördernden Schüttgutes gewählt werden - dennoch mit der Zeit zusetzen kann, sind oberhalb des Siebes eine oder mehrere Reinigungsdüsen 24 angeordnet, die von der Steuerung 22 aus ebenfalls mit Druckluft beaufschlagbar sind und mit deren Hilfe die Ablagerungen am Sieb freigeschossen werden, vorzugsweise während die Förderluft eingeschaltet ist, um sich vom Sieb lösende Staubpartikel unmittelbar nach oben zur Auslassöffnung zu fördern.

Die an der Auslassöffnung 18 angeschlossene Staubleitung 20 mündet in einem Staubsammelbehälter 12, den die Förderluft nur über ein insbesondere in der Oberseite des Sammelbehälters 12 angeordneten Filter 2 verlassen kann, der so dicht ist, dass er von den Staubpartikeln 11 nicht durchdrungen werden kann.

Der Staub lagert sich daher am Filter 2 ab und fällt auf den Boden des Sammelbehälters 12 herunter. Als Druckluftquelle ist meist ein am Einsatzort vorhandenes Druckluftnetz mit üblicherweise 6 Bar vorhanden, welches ebenfalls an die Steuerung 22 angeschlossen ist, gegebenenfalls auch an den Luftaufbereiter 23 für den Trockner 7.

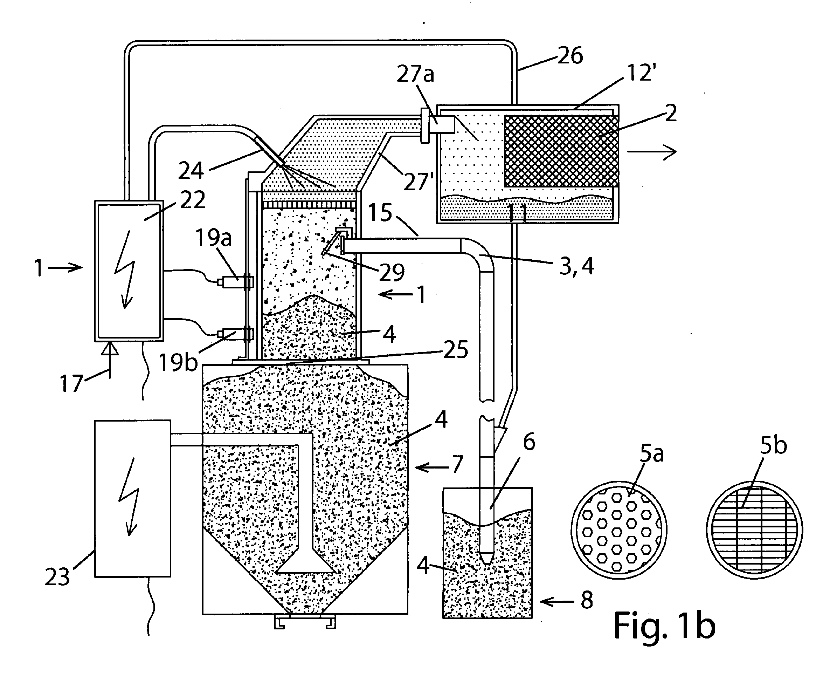

Figur 1b unterscheidet sich von Figur 1a dadurch, dass der Staubsammelbehälter nicht weit entfernt und über eine meist flexible Staubleitung 20 an den Granulatabscheider angeschlossen ist und auch mechanisch fest am Staubabscheider fixiert ist:

Hierzu ist der Deckel 27' des Granulatabscheiders mit einer über die Grundfläche des Granulatabscheiders radial nach außen vorstehenden Rüssel 27 ausgestattet, auf den der Sammelbehälter 12' mit einer entsprechenden Einlassöffnung direkt aufgesteckt und dadurch gehaltert werden kann, ohne das eine flexible Schlauchleitung zwischen beiden benötigt wird.

Dementsprechend befindet sich in Figur 1b auch der Auslass und mithin der Filter 2 nicht in der Oberseite, sondern in der der Mündung gegenüberliegenden Stirnfläche des hier beispielsweise zylindrisch liegenden Sammelbehälters 12'.

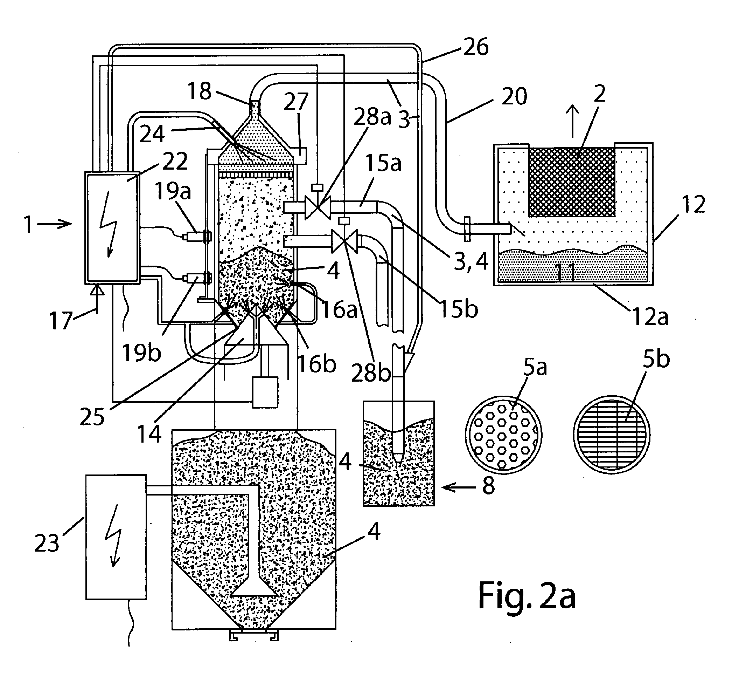

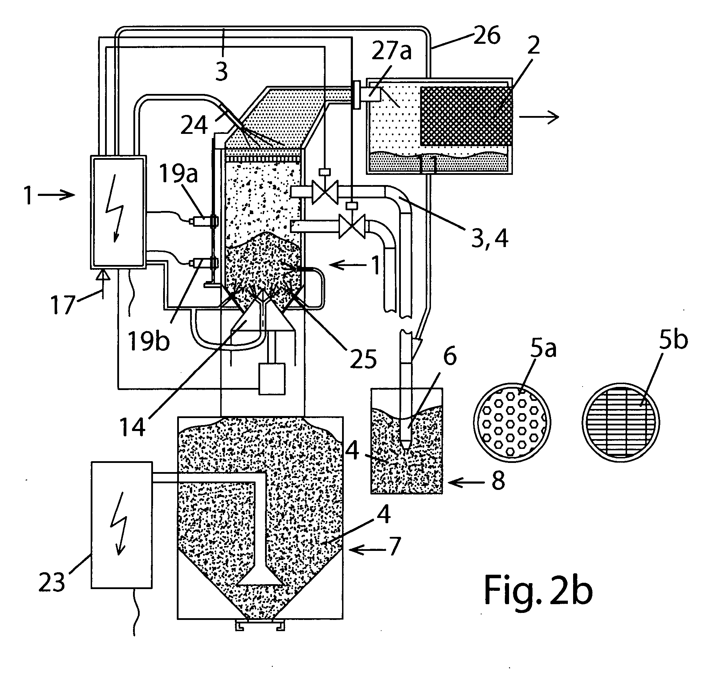

Die Lösungen Figuren 2a und 2b entsprechen denen der Figuren 1a und 1b bis auf die zusätzliche zweite Entstaubungsstufe.

Dabei ist die untere Granulatöffnung 25 im Granulatabscheider durch einen von unten in die Granulatöffnung 25 dicht einfahrbaren Verschlusskonus verschließbar und die Seitenwände des Granulatabscheiders 1 verjüngen sich zu der Granulatöffnung 25 hin von oben nach unten konisch zulaufend.

Sowohl in den kegeligen, in den Granulatabscheidern geschlossenen Zustand hineinragenden Elementen des Verschlusskonus, als auch in den konischen unteren Seitenwänden des Verschlusskonus und/oder den vertikalen Seitenwänden des Granulatabscheiders 1 darüber, sind Druckluftdüsen 16a, b angeordnet, die wiederum mit der Steuerung 22 in Verbindung stehen und von dieser angesteuert Druckluft in das abgelagerte Granulat einschießen und dadurch das Granulat im Abscheider 1 nochmals durcheinander wirbeln können.

Zu diesem Zweck sind die in den Figuren 2a, b beiden im Granulatabscheider 1 mündenden Förderleitungen 15a, b (die von unterschiedlichen Vorratsbehältern 8 Material zufördern können) mit einem Ventil 28a, b verschließbar, um während des Einschubes von Druckluft über die Druckluftdüsen 16ab... ein Eindringen von Staub und Granulat in die Förderleitung 15a, b verhindern zu können.

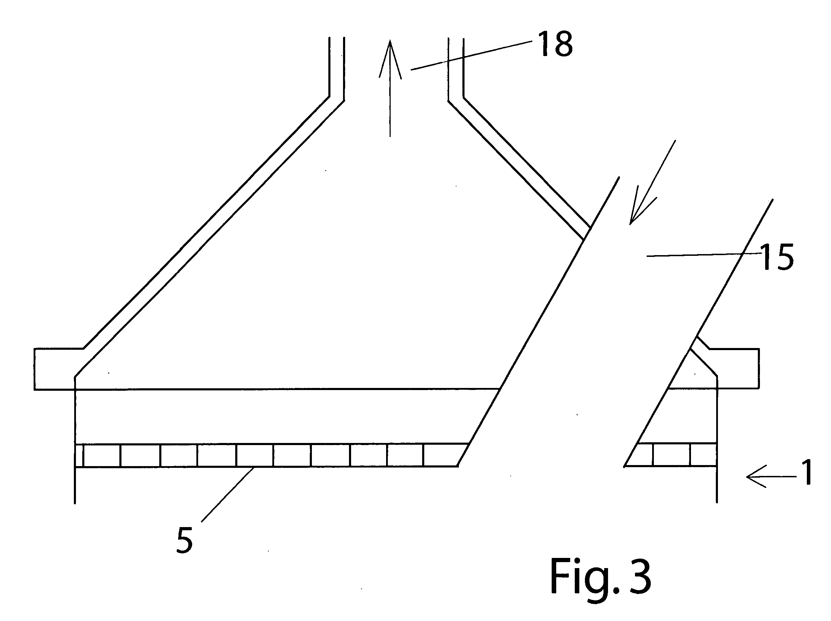

Figur 3 zeigt einen wie z. B. in der Figur 2a nach oben sich konisch verjüngenden Deckel 27 des Granulatabscheiders 1, an dessen höchsten Punkt die Auslassöffnung 18 für das Luft-Staub-Gemisch angeordnet ist, sowie das unterhalb des Deckels im zylindrischen Bereich angeordnete Sieb 5.

In Figur 3 ist dargestellt, dass die Förderleitung 15 keineswegs zwingend in einer der Seitenwände des Granulatabscheiders münden muss, wie in den Figuren 1 und 2 dargestellt, sondern stattdessen auch in der oberen Stirnfläche, also dem Deckel, münden kann.

Dies hat den Vorteil, dass die Mündung dann gegen den Boden, also den Granulatsammelbereich, des Abscheiders gerichtet ist.

Dadurch werden die Innenflächen der Seitenwände weniger stark durch auftreffende Granulatkörper belastet und der Verschleiß im Granulatabscheider ist geringer.

Um dies zu realisieren kann die Förderleitung 15 neben dem wie bisher zentral angeordneten Auslassöffnung 18 im Deckel angeordnet sein oder zu diesem Zweck kann - was nicht dargestellt ist - die Auslassöffnung 18 auch aus dem Zentrum heraus ersetzt sein.

Selbstverständlich muss bei einer solchen Lösung die Förderleitung 15 auch das Sieb 5 durchdringen, welches zu feinmaschig ist, um Granulatkörner hindurchtreten zu lassen.

Ein Verschlusselement in der Förderleitung 15 kann auch in diesem Fall - sofern notwendig - wahlweise innerhalb als auch außerhalb des Granulatabscheiders angeordnet sein.

Als übliche Verschlusselemente stehen herkömmliche Ventile, dann meist außerhalb des Abscheiders angeordnet, ebenso zur Verfügung wie auch das freie Ende der Mündung aufsetzbare Verschlusskegel.

### BEZUGSZEICHENLISTE

- 1: Granulatabscheider
- 2: Filter
- 3: Förderluft
- 4: Granulat
- 5: Sieb
- 6: Ejektorsauglanze
- 7: Granulat-Trockner
- 8: Vorratsbehälter
- 9: Auslassöffnung
- 10: Strömungsrichtung
- 11: Staub
- 12: Staub-Sammelbehälter
- 12a: Boden
- 13:
- 14: Verschlusskonus
- 15: Förderleitung
- 16: Druckluftdüsen
- 17: Druckluftquelle
- 18: Auslassöffnung
- 19a, b: Füllstandssensor
- 20: Staubleitung
- 21: Ejektordüse
- 22: Steuerung
- 23: Luftaufbereiter
- 24: Reinigungsdüsen
- 25: Granulatöffnung
- 26: Druckluftleitung
- 27: Deckel
- 27a: Rüssel
- 28a, b: Ventile
- 29: Verschlussklappe

## Patentansprüche

1. Druckluftförderanlage mit einem Granulatabscheider (1), einer Förderleitung (15), die im Granulatabscheider (1) zum Anliefern des Fördergutes mündet, und einer in einer Ejektor-Sauglanze (6) mündenden Druckluftleitung (26), an der die Förderleitung (15) angeschlossen ist, wobei der Granulat-Abscheider (1):
- einen Filter (2), welcher von der Förderluft (3), aber nicht von Staub durchdrungen werden kann, der in einem Staub-Sammelbehälter (12) abseits des Granulat-Sammelbereiches des Granulatabscheiders (1) angeordnet ist; und
- ein dem Filter (2) vorgelagertes Sieb (5), welches von der Förderluft (3) und dem Staub (11), durchdrungen werden kann, und welches gerade engmaschig genug ist, um sämtliche Granulatpartikel zurückzuhalten; aufweist.

2. Druckluftförderanlage nach Anspruch 1,
**dadurch gekennzeichnet, dass**
- der Staubsammelbehälter (12) ein separater, vom Granulatabscheider getrennter, und mit diesem über eine Staubleitung (20) dicht verbundener Behälter ist, und
- der Staub-Sammelbehälter (12) einen geschlossenen Boden (12a) aufweist, auf dem sich der z. B. vom Filter (2) herabfallende Staub sammelt.

3. Druckluftförderanlage nach einem der vorhergehenden Ansprüche,
**dadurch gekennzeichnet, dass**
der Granulat-Sammelbereich eine verschließbare Granulatöffnung (25) aufweist und im Auslaufbereich, insbesondere in den Seitenwänden des Auslaufes und/oder dessen Verschlusselement Druckluftöffnungen, insbesondere Druckluftdüsen, münden, die in den Granulat-Sammelbereich hineingehend gerichtet sind.

4. Druckluftförderanlage nach einem der vorhergehenden Ansprüche,
**dadurch gekennzeichnet, dass**
die Förderleitung (15) einen automatisch verschließenden Verschluss aufweist.

5. Druckluftförderanlage nach einem der vorhergehenden Ansprüche,
**dadurch gekennzeichnet, dass**
der Filter (2) möglichst großflächig ausgebildet ist und insbesondere seine Außenkontur mindestens 40%, besser mindestens 50%, besser mindestens 70% des freien Innenraumes des Sammelbehälters (12) ausfüllt.

6. Druckluftförderanlage nach einem der vorhergehenden Ansprüche,
**dadurch gekennzeichnet, dass**
- der Sammelbehälter (12) ein Fass, insbesondere ein Kunststofffass mit dicht aufsetzbarem Deckel ist und der Filter (2) mit seiner Oberseite im Deckel dicht befestigt ist, und
- die Staubleitung (20) oberhalb des unteren Endes des Filters in der Seitenwand des Fasses mündet und zwischen der Mündung und dem Filter ein Prallblech angeordnet ist.

7. Druckluftförderanlage nach einem der vorhergehenden Ansprüche,
**dadurch gekennzeichnet, dass**
- die Staubleitung (20) von der Auslassöffnung (18) zum Sammelbehälter (12) eine flexible Schlauchleitung ist und an den Sammelbehälter (12) mehrere, von verschiedenen Granulatabscheidern kommende, Staubleitungen (20) angeschlossen sind, oder
- der Staub-Sammelbehälter (12) über einen festen Anschlussstutzen an einer Auslassöffnung (18) des Abscheiders angeschlossen und auch mechanisch daran gehalten ist oder einstückig zusammen mit wenigstens dem Deckel des Abscheiders ausgebildet ist.

8. Druckluftförderanlage nach einem der vorhergehenden Ansprüche,
**dadurch gekennzeichnet, dass**
die Auslassöffnung (18) zentral im oberen Querschnitt des Abscheiders angeordnet ist und sich dieser Querschnitt nach oben zur Auslassöffnung (18) hin, insbesondere konisch, verjüngt.

9. Druckluftförderanlage nach einem der vorhergehenden Ansprüche,
**dadurch gekennzeichnet, dass**
das Sieb (5) eine auswechselbare Siebscheibe aufweist und sich unterhalb dem abnehmbaren Deckel des Abscheiders befindet, in dem die Auslassöffnung (18) angeordnet ist.

10. Druckluftförderanlage nach einem der vorhergehenden Ansprüche,
**dadurch gekennzeichnet, dass**
die Seitenwände des Abscheiders wenigstens teilweise aus Glas oder Kunststoff, bestehen und außen an der Wand wenigstens ein kapazitiver Füllstandssensor (19) angeordnet ist.

11. Druckluftförderanlage nach einem der vorhergehenden Ansprüche,
**dadurch gekennzeichnet, dass**
in der Staubleitung (20) wenigstens eine Zusatz-Ejektordüse (21) angeordnet ist.

12. Druckluftförderanlage nach Anspruch 4,
**dadurch gekennzeichnet, dass**
der Verschluss in der Förderleitung (15) ein Sperrventil, insbesondere unmittelbar vor dem Eintritt der Förderleitung (15) in den Abscheider, ist.

13. Druckluftförderanlage nach einem der vorhergehenden Ansprüche,
**dadurch gekennzeichnet, dass**
die Mündung der Förderleitung (15) im Deckel (27) des Granulatabscheiders mündet und auf den Boden des Granulatabscheiders gerichtet ist.

14. Druckluftförderanlage nach Anspruch 4,
**dadurch gekennzeichnet, dass**
das freie Ende der Förderleitung (15) schräg zugeschnitten ist, wobei das untere Ende weiter vorsteht als das obere Ende und die Verschlussklappe (29) im vollständig geöffneten Zustand schräg nach oben, vom Gelenkpunkt der Förderleitung (15) wegweisend, gerichtet ist und als Prallplatte dient.

15. Verfahren zur Fraktionentrennung von Fraktionen unterschiedlicher Korngrößen, insbesondere Staub einerseits und wesentlich größeren Partikeln in einem Fördergut aus Granulat oder Mahlgut andererseits, wobei
- das Gemisch aus den beiden Fraktionen mittels Förderluft (3) einem Abscheider zugefördert wird,
- die Förderluft (3) zusammen mit der feinen Fraktion im oberen Bereich des Abscheiders durch eine Auslassöffnung entlassen und einem separaten Staubsammelbehälter (12) zugeführt wird, während die größeren Partikel durch ein diese Auslassöffnung (18) verschließendes Sieb (5) zurückgehalten werden und sich im unteren Bereich des Granulatabscheiders schwerkraftbedingt sammeln,
**dadurch gekennzeichnet, dass**
das Gemisch aus druckluftbetriebenen Ejektorsauglanzen (6) dem Abscheider zugefördert wird.

16. Verfahren nach Anspruch 15,
**dadurch gekennzeichnet, dass**
während oder nach dem Fördern zusätzlich die Auslassöffnung sowie gegebenenfalls auch die Förderleitungen verschlossen werden und über Druckluftdüsen (16a, b) Reinigungsluft von unten in das Granulat eingeblasen wird.

## Claims

1. A compressed air driven supply device comprising a granulate separator (1), a supply conduit (15) which opens into the granulate separator (1) for supplying the feed material and a compressed air conduit (26) opening into an ejector suction lance (6), wherein the supply conduit (15) is connected to the compressed air conduit, wherein the granulate separator (1) comprises:
- a filter (2) which can be permeated by the supply air (3), but not by dust which is disposed in a dust collection container (12) separate from the granulate collecting portion of the granulate separator (1); and
- a screen (5), disposed in front of the filter (2) which can be permeated by the feed air (3) and by the dust (11) and whose mesh is tight enough, so that it retains all granulate particles.

2. The compressed air driven supply device according to claim 1, wherein
- the dust collection container (12) is a container that is separate from the granulate separator and connected tight with the granulate separator with a dust conduit (20); and
- the dust collection container (12) comprises a closed base (12a), on which the dust collects that e.g. falls down from the filter (2).

3. The compressed air driven supply device according to one of the preceding claims, wherein the granulate collection portion comprises a closable granulate opening (25) and wherein compressed air openings, in particular compressed air nozzles, open into the outlet portion, in particular into the side walls of the outlet, and/or into its closure element, which compressed air openings are oriented into the granulate collection portion.

4. The compressed air driven supply device according to one of the preceding claims, wherein the supply conduit (15) comprises a closure (5), which closes automatically.

5. The compressed air driven supply device according to one of the preceding claims, wherein the filter (2) is configured with the largest surface area possible, and in particular, its outer contour fills at least 40%, better at least 50%, better at least 70% of the free inner space of the collection container (12).

6. The compressed air driven supply device according to one of the preceding claims, wherein
- the collection container (12) is a barrel, in particular a plastic barrel, with a tightly applicable cover, and the filter (2) is attached tight in the cover with its upper side; and
- the dust conduit (20) leads into the side wall of the barrel above the lower end of the filter, and a baffle plate is disposed between the opening and the filter.

7. The compressed air driven supply device according to one of the preceding claims, wherein
- the dust conduit (20) from the outlet opening (18) to the collection container (12) is a flexible hose conduit, and several dust conduits (20) are connected to the collection container (12), which dust conduits come from different granulate separators; or
- the dust collection container (12) is connected through a permanent connection spout to an outlet opening (18) of the separator, and also mechanically supported thereon, or integrally configured together with at least the cover of the separator.

8. The compressed air driven supply device according to one of the preceding claims, wherein the outlet opening (18) is centrally disposed in the upper cross section of the separator and the cross section tapers upward towards the outlet opening (18), in particular in a conical manner.

9. The compressed air driven supply device according to one of the preceding claims, wherein the screen (5) includes a replaceable screen plate and is disposed below the removable cover of the separator in which the outlet opening (18) is disposed.

10. The compressed air driven supply device according to one of the preceding claims, wherein the side walls of the precipitator are at least partially made from glass or plastic material, and at least one capacitive fill level sensor (19) is disposed at the outside of the wall.

11. The compressed air driven supply device according to one of the preceding claims, wherein at least one supplemental ejector nozzle (21) is disposed in the dust conduit (20).

12. The compressed air driven supply device according to claim 4, wherein the closure in the supply conduit (15) is a cutoff valve, in particular directly in front of the entry of the supply conduit (15) into the separator.

13. The compressed air driven supply device according to one of the preceding claims, wherein the outlet of the supply conduit (15) opens into the cover (27) of the granulate separator and is oriented towards the base of the granulate separator.

14. The compressed air driven supply device according to claim 4, wherein a free end of the supply conduit (15) is cut at a slant angle, wherein a lower end protrudes further than an upper end, and a closure cap (29) is oriented upward at a slant angle in completely opened state, so that it points away from the link point of the supply conduit (15) and so that it is used as a baffle plate.

15. A method for fractional separation of fractions with different particle sizes, in particular dust on the one side, and substantially larger particles in a supply material made of granulate or milled material on the other side, wherein
- the mixture made of the two fractions is fed to a separator through feed air (3);
- the feed air (3) is released together with the fine fraction in the upper portion of the separator through an outlet opening (18) and supplied to a separate dust collection container (12), while the larger particles are retained by a screen (5) closing the outlet opening (18) and collect in the lower portion of the granulate separator following gravity,
wherein the mixture is supplied to the separator from compressed air driven ejector suction lances (6).

16. A method according to claim 15, wherein the outlet opening and possibly also the supply conduits are additionally being closed during or after feeding and cleaning air is blown into the granulate from below through compressed air nozzles (16a, b).

## Revendications

1. Installation d'alimentation en air comprimé avec un séparateur de granulé (1), une conduite d'alimentation (15) qui débouche dans le séparateur de granulé (1) pour la livraison de la matière en vrac et une conduite d'air comprimé (26) débouchant dans une lance d'aspiration d'éjecteur (6) et raccordée à la conduite d'alimentation (15), le séparateur de granulé (1) présentant
- un filtre (2) qui peut être traversé par l'air d'alimentation (3) mais pas par la poussière, qui est disposé dans un récipient de collecte de poussière (12) séparément de la zone de collecte de granulé du séparateur de granulé (1) et
- un tamis (5<9 disposé en amont du filtre (2) qui peut être traversé par l'air alimenté (3) et la poussière (11) et dont la trame est suffisamment serrée pour retenir toutes les particules de granules.

2. Installation d'alimentation en air comprimé selon la revendication 1, **caractérisée en ce que**
- le réservoir de collecte de poussière (12) est un réservoir séparé du séparateur de granulé et est un réservoir relié de manière hermétique avec cd dernier par une conduite de poussière (209, et
le récipient de collecte de poussière (12) présente un fond fermé (12a) sur lequel se rassemble la poussière tombant par exemple du filtre (2).

3. Installation d'alimentation en air comprimé selon l'une des revendications précédentes, **caractérisée en ce que** la zone de collecte de granulé présente une ouverture fermable de granulé (25) et des ouverture d'air comprimé débouchent dans la zone de sortie en particulier dans les parois latérales de la sortie et/ou de l'élément de fermeture, en particulier des buses d'air comprimé qui sont orientées en direction de l'intérieur de la zone de collecte de granulé.

4. Installation d'alimentation en air comprimé selon l'une des revendications précédentes, **caractérisée en ce que** la conduite d'alimentation (15) présente une fermeture automatique.

5. Installation d'alimentation en air comprimé selon l'une des revendications précédentes, **caractérisée en ce que** le filtre (2) est réalisé le plus possible largement surfacé et en particulier son contour externe remplit au moins 41 % au mieux au moins 50 %, au mieux 70 % de l'espace interne libre du récipient de collecte (12).

6. Installation d'alimentation en air comprimé selon l'une des revendications précédentes, **caractérisée en ce que**
- le récipient de collecte (12) est un fût en particulier un fût en matière pastique avec un couvercle étanche et le filtre (2) est fixé de manière étanche dans le couvercle par sa face supérieure et
- la conduite de poussière (20) débouche en amont de l'extrémité inférieure du filtre dans la paroi latérale du filtre et une tôle déflectrice est disposé entre l'embouchure et le filtre.

7. Installation d'alimentation en air comprimé selon l'une des revendications précédentes, **caractérisée en ce que**
- la conduite de poussière (20) est une conduite flexible entre l'ouverture de sortie (18) et le récipient de collecte (12) et plusieurs conduites de poussière (20) sont raccordées au récipient collecteur (12) provenant de différents séparateurs de granulés, ou
- le récipient de collecte de poussière (12) est raccordé par une tubulure de raccordement fixe à une ouverture de sortie (18) du séparateur et y est maintenu mécaniquement ou est réalisé d'une seule pièce ensemble avec au moins le couvercle du séparateur.

8. Installation d'alimentation en air comprimé selon l'une des revendications précédentes, **caractérisée en ce que** l'ouverture de sortie (18) est disposée centralement dans la section supérieure du séparateur et la section transversale se réduite en particulier coniquement vers le haut en direction de l'ouverture de sortie (18).

9. Installation d'alimentation en air comprimé selon l'une des revendications précédentes, **caractérisée en ce que** le tamis (5) présente un disque de tamis interchangeable et se trouve en dessous du couvercle amovible du séparateur dans lequel est disposée l'ouverture de sortie (18).

10. Installation d'alimentation en air comprimé selon l'une des revendications précédentes, **caractérisée en ce que** les parois latérales du séparateur se composent au moins partiellement de verre ou de plastique et un capteur de niveau capacitif (19) est au moins disposé sur la paroi.

11. Installation d'alimentation en air comprimé selon l'une des revendications précédentes, **caractérisée en ce qu'**au moins une buse d'éjecteur supplémentaire (21) est disposée au moins dans la conduite de poussière (20).

12. Installation d'alimentation en air comprimé selon la revendication 4, **caractérisée en ce que** la fermeture dans la conduite de transport (15) est une vanne d'arrêt en particulier juste avant l'entrée de la conduite de transport (15) dans le séparateur.

13. Installation d'alimentation en air comprimé selon l'une des revendications précédentes, **caractérisée en ce que** l'embouchure de la conduite de transport (15) débouche dans le couvercle (27) du séparateur de granulé et est dirigé en direction du fond du séparateur de granulé.

14. Installation d'alimentation en air comprimé selon la revendication 4, **caractérisée en ce que** l'extrémité de la conduite de transport (15) est découpée en biseau, l'extrémité inférieure faisant saillie plus vers l'avant que l'extrémité avant et le capot de fermeture (29) étant orienté dans l'état fermé complètement de manière inclinée vers le haut en s'éloignant du point d'articulation de la conduite de transport (15) et sert de plaque déflectrice.

15. Procédé pour le fractionnement de fractions de différentes granulométries en particulier de poussière et essentiellement de particules plus grossières dans une matière en vrac de granulé ou matière broyée d'autres part,
- le mélange des deux fractions étant amené à un séparateur par un air de transport (3),
- l'air de transport (3) s'échappant ensemble avec la fraction fine dans la zone supérieure du séparateur par une ouverture de sorite et étant amené à un récipient séparé de collecte (12) de poussière, tandis que les particules les plus grossières étant retenues par un tamis (5) fermant cette ouverture de sortie (18) d et se rassemblant dans la zone inférieure du séparateur de granulé par gravité,
**caractérisé en ce que**
le mélange provenant des lances d'aspiration d'éjecteur (6) entraînées par air comprimé est alimenté au séparateur.

16. Procédé selon la revendication 15, **caractérisé en ce que** pendant ou après le transport, l'ouverture de sortie ainsi qu'éventuellement les conduites d'amenée sont fermées et de l'air de nettoyage est soufflé dans le granulé par le bas par des buses d'air comprimé (16a, b).
